# EUROPÄISCHE PATENTSCHRIFT

(11) **EP 3 134 699 B1**
(45) Veröffentlichungstag und Bekanntmachung des Hinweises auf die Patenterteilung: **02.06.2021**
(21) Anmeldenummer: 15721587.2
(22) Anmeldetag: 20.04.2015
(51) Int. Cl.: F28F 13/00, F28D 15/02, F24S 10/95

(54) **WÄRMEÜBERTRAGUNGSVORRICHTUNG UND SOLARKOLLEKTOR**
HEAT-TRANSFER DEVICE AND SOLAR COLLECTOR
DISPOSITIF ÉCHANGEUR DE CHALEUR ET COLLECTEUR SOLAIRE

(30) Priorität: 23.04.2014 DE 102014105680
(43) Veröffentlichungstag der Anmeldung: 01.03.2017
(73) Patentinhaber: Fraunhofer-Gesellschaft zur Förderung der angewandten Forschung e.V., 80686 München (DE)
(72) Erfinder: HERMANN, Michael, 79194 Heuweiler (DE); MORAWIETZ, Katharina, 79115 Freiburg (DE); DI LAURO, Paolo, 79279 Vörstetten (DE)
(86) Internationale Anmeldenummer: PCT/EP2015/058472
(87) Internationale Veröffentlichungsnummer: WO 2015/162077

(56) Entgegenhaltungen:
- EP-A1- 1 308 686
- WO-A1-83/01401
- WO-A1-2006/024750
- WO-A2-02/102124
- DE-A1- 2 555 599
- DE-A1- 4 108 981
- DE-A1-102011 119 403
- DE-T5- 10 296 928
- DE-U1- 29 510 764
- JP-A- S55 134 248
- JP-A- S57 112 654
- JP-A- S58 182 057
- JP-A- 2004 198 098
- US-A1- 2006 187 639
- US-A1- 2010 038 066
- US-A1- 2011 042 042
- US-A1- 2011 110 042
- US-A1- 2013 194 747

## Beschreibung

Die nachfolgende Erfindung betrifft eine Wärmeübertragungsvorrichtung zur Abfuhr von Wärme aus einem Solarkollektor und einen Solarkollektor.

Wärmerohre bzw. "Heatpipes" werden auf Grund ihres im Vergleich mit massiven Metallstäben um mehrere Größenordnungen höheren thermischen Leitwert eingesetzt. Neben Einsätzen in der Raumfahrt und in Computern werden sie vor allem auch in Solarkollektoren verwendet. Wärmerohre sind mit einem Arbeitsmedium gefüllte, hermetisch verschlossene Systeme, bei denen der Wärmetransport im Wesentlichen auf der Übertragung latenter Wärme beruht. Das Medium wird hierbei an einem Verdampferende durch Wärmezufuhr verdampft und wird dampfförmig zum Kondensatorende transportiert, wo die Wärme unter Kondensation wieder abgegeben wird. Der Begriff "Ende" ist hierin nicht wörtlich aufzufassen, sondern meint einen endständigen Bereich, wobei sich die Wärmezuführungszone bei solarthermischen Röhrenkollektoren durchaus entlang eines Großteils der Gesamtlänge des Wärmerohrs erstrecken kann.

In solarthermischen Kollektoren ist neben der so genannten nassen Anbindung, bei der das Kondensatorende des Wärmerohrs in einen fluiddurchströmten Sammelkanal taucht, die trockene Anbindung bekannt. Hierbei ist beispielsweise vorgesehen, dass der Sammelkanal zwei Teilkanäle aufweist, einen Vorlauf- und einen Rücklaufkanal, die einen Aufnahmebereich bilden, in den das Kondensatorende trocken eingesteckt ist und von den Teilkanälen umschlossen wird. Um den Wärmeübergang an dieser Stelle zu verbessern, wird das Kondensatorende häufig als Kondensatorkopf mit vergrößertem Durchmesser ausgeführt und/oder es wird eine Klemmung zur Erhöhung der Pressung vorgesehen.

Anders als bei nasser Anbindung können einzelne defekte Wärmerohre bei trockener Anbindung ohne Ablassen des Wärmeträgerfluids ausgetauscht werden; am trockenen Übergang vom Kondensatorende des Wärmerohrs zum Sammelkanal tritt jedoch ein hoher Wärmeübergangswiderstand auf, der in Bezug auf den thermischen Widerstand des gesamten "thermischen Pfads" von der Wärmeeinleitung, vom Absorber über die Heatpipe selbst, über die trockene Anbindung bis in das im Sammelkanal zirkulierende Fluid bis zu 70 % beträgt. Maßnahmen aus dem Stand der Technik wie Erhöhung der Oberflächenpressung, Vergrößerung des Kondensatorkopfs und Verwendung von Wärmeleitpasten oder -folien konnten diesen konstruktionsprinzipbedingten Nachteil nicht beheben.

Auch die EP 0 198 126 A1 befasst sich mit einer Heatpipe, deren Verdampfer zur Verbesserung des Wärmeaustauschs mit einem strömenden Gas eine Mehrzahl parallel zueinander angeordneter hohle Finnen hat, die mit dem Innenraum des Wärmerohrs verbunden sind, sodass dem Arbeitsmedium direkt an der Innenseite der Finnen Wärme zugeführt werden kann.

Eine weitere Möglichkeit, den Wärmeübergang von der Heatpipe zu einem Sekundärmedium zu verbessern, wird in der DE 20 2007 014 238 U1 beschrieben. Dort wird eine trockene Kondensatoranbindung vorgeschlagen, deren Nassseite Kühlrippen aufweist. Eine Verbesserung des Wärmeübergangs am "thermischen Flaschenhals", nämlich an der trockenen Anbindung des Kondensator-/Verdampferendes der Heatpipe, wird dort jedoch nicht adressiert, während der Druckverlust durch die in den Strömungspfad einragenden Rippen erhöht wird.

Aus der DE 10 2011 077 477 A1 ist eine solarthermische Anlage bekannt, bei der mehrere Wärmerohre in einem Kollektor verlaufen. Die Wärmerohre bilden damit den Verdampferteil eines Thermosyphons, wobei der Kondensatorteil durch einen Ringraum gebildet ist, der ein Innenrohr umschließt. Im Innenrohr wird beispielsweise Wasser verdampft, um eine Turbine anzutreiben. Erfindungsgemäß ist vorgesehen, dass der Ringraum in mehrere Teilräume unterteilt ist, so dass in den Gruppen von Wärmerohren unterschiedliche Arbeitsmedien zum Einsatz kommen können. Dadurch kann das Wasser schrittweise in dem Innenrohr erwärmt werden, so dass ein optimaler Wärmeübergang in jedem Teilraum ermöglicht wird.

Aus der EP 1 752 720 A1 ist ein Glas-Vakuum Wärmerohr bekannt. Die Erfindung umfasst eine komplett aus Glas aufgebaute Solarkollektorröhre und eine daran angebrachte weitere Röhre. Ferner ist ein geschlossener Raum vorhanden und ein flüssiges Wärmeübertragungsmedium. Das Verhältnis des Volumens des flüssigen Wärmeübertragungsmediums zum Volumen des geschlossenen Raums beträgt 0,03% bis 10%. Die Länge des Kondensationsabschnitts beträgt 40 mm bis 300 mm. An der angebrachten weiteren Röhre sind Vorsprünge vorgesehen und eine dünne Wand zur Druckbegrenzung. Eine Vielzahl von ringförmigen Unterstützungselementen ist zwischen einer inneren Glasröhre und einer äußeren Glasröhre angeordnet. Diese Anordnung kann leicht hergestellt werden und erlaubt einen sicheren und verlässlichen Betrieb.

Aus der DE 41 08 981 A1 ist ein Thermosyphonkreislauf bekannt. Dabei wird durch Verdampfung eines Kältemittels in einem Verdampfer und anschließende Kondensation in einem Kondensator die Wärme einer Wärmequelle abgeführt. Ausführungsformen sehen vor, dass Strukturen vorhanden sind, die Wärmeübertragungsfläche zu erhöhen.

Aus der WO 02/102142 A2 ist ein Kühlsystem für elektronische Vorrichtungen bekannt. Dabei werden zur verbesserten Übertragung der Wärme von einem Bauteil auf ein anderes Bauteil Rippenstrukturen eingesetzt. Diese können mit einer Anpressvorrichtung aneinander gedrückt werden.

Aus der US 2006/0187639 A1 ist ein Kühlsystem für eine wärmeerzeugende Einrichtung auf einer Platine bekannt. Dabei sind keine Fluidverbindungen vorhanden, welche erzeugt oder unterbrochen werden müssten, um die Platine zu installieren oder zu entfernen. Dabei ist auf der Platine eine Wärmesammeleinheit angeordnet, die in wärmeübertragendem Kontakt mit einer heißen Komponente auf der Platine ist. Ferner ist eine Wärmeabfuhreinrichtung vorhanden, welche mit einer Seite an der Platine montierbar ist. Fluidleitungen bilden einen geschlossenen Strömungspfad zwischen der Wärmesammeleinheit und dem an der Platine montierten Teil der Wärmeabfuhreinrichtung. Die an der Platine gelegene Seite und die davon abgewandte Seite der Wärmeabfuhreinrichtung können wärmeübertragend befestigt werden, um Wärme von der Platine abzuführen.

Aus der DE 10 2011 119 403 A1 ist eine Vorrichtung mit mindestens einem Wärmerohr mit mindestens je einem Kondensator bekannt, welche zum Wärmetransport zwischen einem Wärmeerzeuger und einem Sekundärkreislaufrohr dient. Dabei weicht das Sekundärkreislaufrohr aus seiner Hauptrichtung durch die Ausformung mindestens eines Bogens ab. Der Bogen verläuft vorzugsweise in der Ebene oder parallel zur Ebene des Wärmeerzeugers. Der Kondensator verläuft über einen überwiegenden Anteil seiner Längserstreckung parallel zu einem Teilbereich des Sekundärkreislaufrohrs und berührt dieses direkt oder indirekt. Damit wird ein direkter oder indirekter thermischer Kontakt zwischen Kondensator und Sekundärkreislaufrohr hergestellt.

Ausgehend von diesem Stand der Technik liegt der vorliegenden Erfindung die Aufgabe zu Grunde, eine Wärmeübertragungsvorrichtung zu schaffen, die bei trockener Anbindung einen optimierten Wärmeübergang von einem Wärmerohr zu einer Wärmequelle oder Wärmesenke hat und dabei kostengünstig und in weiten Teilen automatisiert herstellbar ist.

Diese Aufgabe wird durch eine Wärmeübertragungsvorrichtung mit den Merkmalen des unabhängigen Anspruchs 1 gelöst.

Darüber hinaus ergibt sich die Aufgabe, einen Solarkollektor zu schaffen, der sich durch einen verringerten Wärmeübergangswiderstand der trockenen Wärmerohranbindung und einen zumindest mit dem Stand der Technik vergleichbaren Druckverlust auszeichnet und dabei kostengünstig herstellbar ist.

Diese Aufgabe wird durch einen Solarkollektor mit den Merkmalen des Anspruchs 12 gelöst.

Bevorzugte Ausführungsbeispiele werden jeweils durch die Unteransprüche beschrieben.

Die erfindungsgemäße Wärmeübertragungsvorrichtung zur Abfuhr von Wärme aus einem Solarkollektor weist ein Wärmerohr mit einem Transportraum und eine Wärmequelle oder Wärmesenke auf, wobei das Wärmerohr mit der Wärmequelle oder Wärmesenke in thermischem Kontakt steht. Einer der beiden Kontaktpartner, das Wärmerohr oder die Wärmequelle oder Wärmesenke, hat eine Mehrzahl hohler Ausstülpungen und der andere Kontaktpartner eine Mehrzahl Vertiefungen, die eine Negativform zu den Ausstülpungen sind. Zumindest eine vorbestimmte Anzahl der Ausstülpungen des einen Kontaktpartners greift in die Vertiefungen des anderen Kontaktpartners ein. Die Wärmeübertragungsvorrichtung weist zumindest eine Anpressvorrichtung auf, wobei die Anpressvorrichtung zur Erzeugung einer Anpresskraft in Vertiefungsrichtung kraftleitend mit der Wärmequelle, bzw. Wärmesenke, und dem Wärmerohr verbunden ist.

In "thermischem Kontakt stehen" meint hier eine trockene Anbindung; d. h. die hohlen Ausstülpungen des einen Kontaktpartners kontaktieren kein Wärmeträgermedium, sondern an den Vertiefungen die Wandung des anderen Kontaktpartners. Es kann hierbei insbesondere vorgesehen sein, dass alle Ausstülpungen bzw. Vertiefungen in Eingriff mit Kontaktpartnern stehen, was insbesondere bei sich periodisch wiederholenden Ausstülpungs- bzw. Vertiefungsanordnungen sinnvoll ist. Die Begriffe Wärmequelle oder Wärmesenke sind sehr allgemein zu verstehen; hierunter Fallen beispielsweise fluiddurchströmte Wärmetauscher, Festkörper oder weitere Wärmerohre. Bei den vorgenannten Wärmequellen/-senken handelt es sich jedoch nur um Beispiele; die Erfindung ist nicht hierauf beschränkt.

Wenn das Wärmerohr eine Wärmesenke kontaktiert, handelt es sich bei dem in Kontakt stehenden Ende folglich um das Kondensatorende, wenn es sich um eine Wärmequelle handelt um das Verdampferende. Das jeweils andere Ende kann ebenfalls mit einer Wärmequelle oder Wärmesenke verbunden sein. Alternativ ist auch vorstellbar, dass Wärme über eine vergleichsweise große Länge direkt in das Wärmerohr ein- bzw. ausgekoppelt wird, was beispielsweise bei einem beschichteten Wärmerohr in einem Solarkollektor oder bei einem über die Länge des Wärmerohrs angelöteten Absorber der Fall ist.

Die hohlen Ausstülpungen und die korrespondierenden Vertiefungen können beliebige Formen haben, die geeignet sind, die am konduktiven Wärmeaustausch beteiligte Oberfläche und/oder den Wärmeübergangskoeffizienten zu vergrößern; beispielsweise können sich die Ausstülpungen und Vertiefungen quasi-einachsig von/in eine(r) Wärmerohr- bzw. Wärmequellen/Wärmesenkenoberfläche erstrecken; sie können etwa noppen-, stift-, finnen-, finger- oder dornförmig sein.

Unter "Wärmerohr" wird eine Vorrichtung verstanden, die unter Nutzung von Verdampfungswärme eines Arbeitsmediums, das in dem Transportraum eingeschlossen ist, eine hohe Wärmestromdichte erlaubt; je nach Einsatztemperaturbereich kann es sich bei dem Arbeitsmedium um Edelgase (für Niedertemperaturanwendungen), Ammoniak oder sogar flüssige Metalle handeln; bei den Anwendungen in der Solartechnik werden jedoch meist Wasser oder wässrige Lösungen von Alkoholen eingesetzt. Je nach geplantem Aufstellwinkel des Wärmerohrs kann zum Kondensatrücktransport alleine die Schwerkraft ausreichen (sogenannter "Thermosiphon") oder es kann im Inneren eine Kondensatrückführungsvorrichtung, etwa Dochtstrukturen, die das Kondensat unter Ausnutzung von Kapillarkräften zurück zum Verdampferende leiten, vorgesehen sein.

In einer weiteren Ausführungsform kann das Wärmerohr die hohlen Ausstülpungen aufweisen, wobei die Ausstülpungen ein Teilvolumen des Transportraums des Wärmerohrs umgeben, und die Wärmequelle bzw. Wärmesenke die Vertiefungen haben kann.

Unter "Transportraum" soll hierin das Innenvolumen des Wärmerohrs verstanden werden, in dem das Arbeitsmedium zirkuliert; dieser Begriff ist klar von dem Begriff der "adiabatischen Transportzone" zu unterscheiden, der in Zusammenhang mit Heatpipes einen Längenbereich zwischen dem Ort der Wärmezuführung und Wärmeabführung bezeichnet. Die Ausstülpungen sind bei dem Wärmerohr der Erfindung nicht lediglich von außen "aufgesetzt", sondern eben gerade mit dem Transportvolumen verbunden; an der großen inneren Oberfläche der Ausstülpungen findet folglich der Wärmeaustausch mit dem Arbeitsmedium statt. Die Ausstülpungen liegen beispielsweise an einer Stirnfläche vor; die Erfindung ist jedoch nicht hierauf beschränkt, sodass auch eine Anordnung an der Mantelfläche grundsätzlich möglich ist. Es kann auch vorgesehen sein, dass beispielsweise beide Stirnflächen hohle Ausstülpungen haben und jeweils mit einer Wärmequelle oder Wärmesenke wie oben beschrieben thermisch gekoppelt sind.

Gemäß einer weiteren Ausführungsform kann es sich bei den hohlen Ausstülpungen um Rippen handeln und die Vertiefungen der Wärmequelle bzw. Wärmesenke können korrespondierende Rinnen sein.

Unter Rippen werden hierbei Auskragungen von/in eine(r) Oberfläche und unter Rinnen Einragungen bzw. Vertiefungen verstanden, die eine Längserstreckung haben, also quasi eine zweiachsige Erstreckung aufweisen (in Höhen- und Längsrichtung). Vorteilhaft lassen sich solche längserstreckenden Geometrien problemlos und kostengünstig durch Strangpressen bzw. Extrudieren herstellen. Die Rippen bzw. Rinnen können beliebige Querschnitte haben, wobei die Querschnittsform fast keinen Restriktionen unterliegt; es können auch komplexe Geometrien stranggepresst werden. Geeigneterweise kann die Anordnung der Rippen bzw. Rinnen an der Wärmequelle bzw. Wärmesenke und dem Wärmerohr auch vertauscht werden.

Bei der Wärmequelle bzw. Wärmesenke kann es sich insbesondere um einen fluiddurchströmten Wärmetauscher handeln. Alternativ oder zusätzlich kann die Wärmequelle bzw. Wärmesenke auch selbst ein Wärmerohr aufweisen. Die Wärmequelle bzw. Wärmesenke kann sogar nur aus einem Wärmerohr bestehen; hierbei kann vorgesehen sein, dass beide Wärmerohre etwa an ihren zueinander weisenden Stirnseiten die beschriebenen korrespondierende Vertiefungen und Ausstülpungen haben und in wärmeleitendem Kontakt stehen. Neben den beispielhaft genannten Wärmequellen bzw.

Wärmesenken-Bauarten sind auch noch viele weitere Bauarten denkbar; beispielsweise konvektive Luft-Wärmetauscher und weitere, bei denen ein Wärmeaustausch mit dem Wärmerohr über die erfindungsgemäße Zusammenwirkung der Vertiefungen und Ausstülpungen geschieht.

Die fluiddurchströmte Wärmequelle bzw. Wärmesenke kann gemäß einer weiteren Ausführungsform wenigstens einen dünnwandigen Fluidführungskanal aufweisen. Die Wandstärke des Fluidführungskanals kann dabei in einem Bereich von 0,5 bis 5,0 mm, bevorzugt in einem Bereich von 0,75 bis 1,5 mm liegen.

Hierbei kann bevorzugt die gesamte Wärmequelle bzw. Wärmesenke mit den Vertiefungen oder Ausstülpungen als Hohlkörper ausgeführt sein. Alternativ dazu können die Vertiefungen der Wärmequelle bzw. Wärmesenke in einem massiven Materialblock vorliegen, der an den Fluidführungskanal angrenzt. Der massive Materialblock ist Teil der Wärmequelle bzw. Wärmesenke und mit dem daran angrenzenden dünnwandigen Fluidkanal wärmeleitend verbunden; vorteilhaft ist dieser sogar einstückig mit dem Fluidkanal ausgebildet. Die Vertiefungen der Wärmequelle bzw. Wärmesenke sind hierdurch deutlich steifer, was insbesondere in Kontakt mit den Ausstülpungen des Wärmerohrs zu geringeren Verformungen und damit zu einem verbesserten Flächenkontakt und damit zu besserer Wärmeübertragung beiträgt. Auch kann die Innendruckbeständigkeit der fluiddurchströmten Wärmequelle bzw. Wärmesenke dadurch erhöht werden.

In einer noch weiteren Ausführungsform können die Rinnen der Wärmequelle bzw. Wärmesenke in Längsrichtung der Wärmequelle bzw. Wärmesenke ausgerichtet sein und etwa einen in Längsrichtung konstanten Querschnitt haben. Alternativ dazu ist es auch möglich, dass die Rinnen der Wärmequelle bzw. Wärmesenke normal zur Längsrichtung der Wärmequelle bzw. Wärmesenke ausgerichtet sind. Bei paralleler Ausrichtung ist vorteilhaft eine flexible Positionierung der/des Wärmerohre(s) möglich; es gibt keine festgelegten Einbaupositionen, vielmehr existiert eine große Designfreiheit und die Freiheit, modular zu arbeiten; beispielsweise können die Abstände der Wärmerohre auch nachträglich verändert werden und/oder weitere Wärmerohre angekoppelt werden. Da die Innenwände der Rinnen bei Ausbildung als vollständiger Hohlkörper in Strömungsrichtung verlaufen, kann zudem ein geringer Druckverlust erreicht werden.

Die Wärmequelle bzw. Wärmesenke lässt sich, insbesondere, wenn es sich um eine Ausführungsform mit konstantem Querschnitt handelt, sehr kostengünstig als Extrusionskörper herstellen. Die Extrusion von mitunter sehr komplexen Geometrien ist aus der Fertigung von Universal-Konstruktionsprofilen und/oder Fensterprofilen bekannt und erprobt. Über dieses Herstellverfahren lässt sich die Wärmequelle bzw. Wärmesenke äußerst kostengünstig und in hohen Stückzahlen herstellen. Zusatzkosten durch eine Erhöhung der Rinnenanzahl, komplexe Rinnengeometrien o. ä. schlagen sich lediglich als einmalige Kosten beim Werkzeugbau nieder. Als Werkstoffe kommen neben Aluminium oder Aluminiumlegierungen auch Kupferbasislegierungen oder Stahl bzw. Stahllegierungen in Frage; die Geometrien können ggf. auch als Strangpressprofil gefertigt werden. Es ist sogar vorstellbar, Polymere oder Ultrahochleistungsbeton einzusetzen. Die genannten Werkstoffe sind jedoch nur Beispiele, die die Erfindung nicht beschränken; es können auch andere Werkstoffe, die bevorzugt eine ausreichende Festigkeit, geringe Korrosionsneigung und hohe Wärmeleitfähigkeit haben, eingesetzt werden.

Weiter können die Vertiefungen der Wärmequelle bzw. Wärmesenke derart ausgeführt sein, dass sie in einer Vertiefungsrichtung, die normal zu der Längsachse der Wärmequelle bzw. Wärmesenke verläuft, keine Hinterschneidungen aufweisen. Hierdurch wird ermöglicht, einzelne Wärmerohre ohne Entnehmen der benachbarten Wärmerohre zu entkoppeln, wohingegen bei einer Ausführungsform mit Hinterschneidungen stets die benachbarten Wärmerohre entlang der Längsachse der Wärmequelle bzw. Wärmesenke zu einem offenen Ende bewegt und entnommen werden müssen. Insbesondere bei fix eingebauter Wärmequelle bzw. Wärmesenke, etwa in einer Dachinstallation, trägt dies entscheidend zur Wartungsfreundlichkeit bei.

Darüber hinaus kann in einer alternativen Ausführungsform zumindest eine Rinne der Wärmequelle bzw. Wärmesenke mit einer gegenüberliegenden Wand des Wärmequelle bzw. Wärmesenke über einen Steg verbunden sein. Dadurch ergeben sich zwei oder mehr unabhängig durchströmbare Teilkanäle, deren Durchströmung jeweils gleichmäßiger ist als bei der Variante mit einem vergleichsweise großen durchströmten Fluidführungskanal und den schmalen daran angrenzenden Rinnen. Der Steg, der im Wesentlichen normal zur Längsrichtung der Wärmequelle bzw. Wärmesenke verläuft, wirkt als Wärmebrücke und verbessert daher die Wärmeeinleitung/-auskopplung vom/in das Fluid. Die Formulierung "im Wesentlichen normal" schließt dabei nicht aus, dass der Steg auch eine leichte Neigung bezüglich der Längsrichtung der Wärmequelle bzw. Wärmesenke haben kann. Die so aufgebaute Wärmequelle bzw. Wärmesenke kann problemlos einstückig und kostengünstig als Strangpressprofil hergestellt werden.

Gemäß einer weiteren Ausführungsform kann die Wärmequelle oder Wärmesenke an voneinander abgewandten Seiten Rinnen aufweisen, was es ermöglicht, beidseitig Wärmerohre anzukoppeln. Dabei ist entweder möglich, dass die Rinnen versetzt zueinander angeordnet sind oder die Rinnen (quasi spiegelsymmetrisch) gegenüberliegen. Demgemäß können entweder die Rinnen an der einen Seite über Stege mit Rinnenzwischenräumen der anderen Seite verbunden sein oder aber die Rinnen der einen Seite sind mit den Rinnen der anderen Seite verbunden. Für eine möglichst homogene Geschwindigkeitsverteilung im durchströmten Querschnitt wird allerdings die Variante mit versetzt angeordneten Rinnen bevorzugt, da bei einer spiegelsymmetrischen Anordnung der Rinnen sich der durchströmte Querschnitt in Querrichtung der Rinnen ändert, was wiederum zu einer ungleichmäßigen Durchströmung führen würde, was insbesondere eine schlechte Durchströmung der Rinnenspitzen zur Folge hätte. Bei einer versetzten Anordnung der Rinnen, die an voneinander abgewandten Seiten der Wärmequelle oder Wärmesenke vorliegen, wird durch die Stege erreicht, dass der durchströmte Querschnitt in Höhenrichtung der unabhängigen "Teilkanäle" nahezu konstant ist, was zu einer gleichmäßigen Geschwindigkeitsverteilung der Strömung beiträgt, d. h. in diesem Fall benachbarte Stege sowie gegenüberliegende Rinnenabschnitte parallel verlaufen.

Durch die Stege kann zudem eine gute Wärmebrückenwirkung zur Einleitung/Auskopplung von Wärme in das /aus dem Wärmerohr erreicht werden und es kann eine sehr steife Struktur erhalten werden. Um eine Anpassung an den zu widerstehenden Innendruck vorzunehmen, können die Wandstärken der Stege und/oder der sonstigen Wandungen entsprechend dimensioniert werden.

Ferner kann die Anpressvorrichtung eine Überwurfmutter, einen Kniehebel und/oder einen Spannhebel umfassen. Die Anpressvorrichtung ist hierbei zur Erzeugung einer Anpresskraft in Vertiefungsrichtung kraftleitend mit der Wärmequelle bzw. Wärmesenke und dem Wärmerohr verbunden. Aufgrund der Abhängigkeit des Wärmeübergangs von der Flächenpressung ist eine möglichst hohe Flächenpressung wünschenswert, wobei die Flächenpressung nicht so hoch gewählt werden sollte, dass sich die Ausstülpungen des Wärmerohrs und/oder die Vertiefungen der Wärmequelle bzw. Wärmesenke bleibend verformen, was einen gegenteiligen Effekt hätte. Eine geringe elastische Verformung zum Ausgleichen der Form-Toleranzen kann jedoch vorteilhaft sein.

Darüber hinaus können die Ausstülpungen und korrespondierenden Vertiefungen einen zickzackförmigen oder verästelten oder rechteckigen oder gewellten oder spitz zulaufenden, etwa in sich geschwungenen, Querschnitt haben, wobei die Querschnitte der Ausstülpungen und der Vertiefungen miteinander korrespondieren. Die vorgenannten Querschnittsformen beschränken die Erfindung nicht, sondern sind lediglich beispielhafte Ausführungsformen; sollte es geeignet erscheinen, können auch andere Ausstülpungs- bzw. Vertiefungsformen eingesetzt werden. Zusätzlich können die Rippen und/oder Rinnen eine Aufdickung aufweisen, bei der es sich etwa um eine Materialanhäufung an den Spitzen bzw. Tälern handeln kann, um die Innendruckstabilität zu erhöhen bzw. die Kerbwirkung zu reduzieren.

Gemäß einer noch weiteren Ausführungsform kann die Wärmequelle bzw. Wärmesenke umlaufend Vertiefungen oder Ausstülpungen haben. Hierbei kann mehr als ein Wärmerohr, sogar drei oder noch mehr, mit der Wärmequelle bzw. Wärmesenke verbunden sein, wobei sich jedes der Wärmerohre jeweils in radialer Richtung von der Wärmequelle bzw. Wärmesenke weg erstreckt. Die Wärmerohre können dabei beispielsweise auch in mehreren Ebenen "gestapelt" angeordnet sein, sodass die Vorrichtung quasi wie ein Baum aufgebaut ist; die die Wärmequelle bzw. Wärmesenke bildet den Stamm und die Wärmerohre die Äste. Der Querschnitt der Wärmequelle bzw. Wärmesenke mit den umlaufend angeordneten Vertiefungen bzw. Ausstülpungen ist hierbei beispielsweise sternförmig.

In einer alternativen Ausführungsform kann das Wärmerohr beispielsweise L-förmig sein, wobei die Ausstülpungen oder Vertiefungen etwa am Ende eines kurzen Stückes vorliegen. Diese Ausführungsform ist besonders vorteilhaft, wenn das Wärmerohr einen sehr flachen Querschnitt hat, dessen Stirnfläche selbst mit den hohlen Ausstülpungen kaum genug Wärmeübertragungsfläche bietet; in diesem Fall kann der Querschnitt an dem abgewinkelten Stück sich aufweiten, sodass eine hinreichend große Stirnfläche zur Verfügung steht.

Der erfindungsgemäße Solarkollektor weist zumindest eine Strahlungsabsorptionsfläche auf, die thermisch mit zumindest einem Wärmerohr verbunden ist. Das Wärmerohr ist mit seinem Kondensatorende über eine erfindungsgemäße Wärmeübertragungsvorrichtung trocken an die Wärmesenke angebunden, wobei die Wärmesenke dazu vorgesehen ist, thermisch mit einem Wärmeabfuhrsystem verbunden zu werden.

Mit Wärmeabfuhrsystem ist hierin die Anbindung des Solarkollektors an den Sekundärkreis gemeint; in der Regel wird hierzu ein Wasser-Glykol-Kreislauf verwendet. Die Strahlungsabsorptionsfläche kann zur Wandlung der Strahlung des Solarspektrums in Wärme vorgesehen sein und bevorzugt eine spektralselektive Beschichtung aufweisen. Alternativ oder zusätzlich kann/können darauf auch ein oder mehrere photoelektrische Energiewandler angeordnet sein, beispielsweise auch in Kombination mit einer thermischen Nutzung als photovoltaisch-thermischer Kollektor.

Anders als bekannte Solarkollektoren mit trockener Heatpipe-Anbindung hat der erfindungsgemäße Solarkollektor aufgrund der Ausstülpungs-Vertiefungs-Anordnung der Wärmeübertragungsvorrichtung einen verbesserten Wärmeübergang an der Trockenseite, während bei Ausrichtung der Rinnen der Wärmesenke in Längsrichtung ein geringer Druckverlust erreichbar ist, da keine Strömungsumlenkungen auftreten. Der erfindungsgemäße Solarkollektor hat daher nicht nur eine hohe thermische Effizienz sondern auch einen guten Gesamtwirkungsgrad, da er nur wenig Hilfsenergie zum Pumpenantrieb benötigt.

Insbesondere kann der Solarkollektor mehrere Wärmerohre aufweisen, die nebeneinander angeordnet sind, bevorzugt in gleichmäßigen Abständen. Die Abstände können bei einer Ausführungsform mit den in Längsrichtung der Wärmequelle bzw. Wärmesenke verlaufenden Rinnen auch flexibel eingestellt werden, was insbesondere für fassadenintegrierte Kollektoren interessant ist. Aus diesem Grund eignet sich der erfindungsgemäße Solarkollektor insbesondere als "Streifenkollektor", d. h. als Fassadenkollektor, der aus vielen schmalen, langen Kollektoren besteht, zwischen denen sich beliebig breite, nicht solaraktiv genutzter Flächen befinden (Putz, Holz, ...). Der Absorber innerhalb eines einzelnen Kollektorstreifens kann ein flaches Wärmerohr (wie beschrieben) sein, das auch spektralselektiv beschichtet sein kann.

Alternativ oder zusätzlich kann jedes der Wärmerohre eine eigene Wärmeabsorptionsfläche haben oder die Wärmerohre können mit einer gemeinsamen Strahlungsabsorptionsfläche verbunden sein. Der erfindungsgemäße Solarkollektor kann auch als Vakuumröhrenkollektor ausgebildet sein, der auch interne oder externe Reflektoren haben kann; grundsätzlich kann es sich aber auch um einen Flachkollektor handeln.

In einer noch weiteren Ausführungsform kann die Strahlungsabsorptionsfläche des Solarkollektors auf einer Mantelfläche des Wärmerohrs vorliegen oder auf einem Absorberstreifen, der thermisch mit dem Wärmerohr verbunden ist. Insbesondere kann es sich bei dem Wärmerohr um ein direkt selektiv beschichtetes Wärmerohr handeln.

Schließlich kann die Wärmesenke von einem Gehäuse umgeben sein, das für jedes der Wärmerohre eine Durchtrittsöffnung aufweist. In dem Gehäuse kann auch eine Wärmedämmung angeordnet sein, die etwa auch einer Außenquerschnittsform der Wärmesenke gegengeformt sein kann und bevorzugt die Wärmesenke zur Vermeidung von Konvektionsverlusten spaltfrei umhüllt. Als Materialien für die Wärmedämmung kommen sämtliche in der Heizungs- und Solartechnik eingesetzten Materialien in Frage; etwa geschäumte Kunststoffe oder Kunststofffasern, etwa aus synthetischem Kautschuk, Mineraldämmstoffe oder auch mit Einschränkungen an die Einsatztemperatur Naturfasern. Die Wärmedämmung wird zur Vermeidung von Luftspalten, in denen sich Konvektion ausbilden kann, möglichst eng anliegend an die Wärmesenke ausgebildet; dies kann auch dadurch erreicht werden, dass die Wärmedämmung als zusammenhängender Dämmstoffkörper extrudiert wird.

Alternativ oder zusätzlich kann der Solarkollektor einen Rahmen aufweisen, der sich entlang der Längsachse des Wärmerohrs bzw. der Wärmerohre erstreckt, wobei das Wärmerohr bevorzugt an dem Rahmen befestigt ist. Das Wärmerohr und die Wärmesenke sind dabei vorteilhaft an dem Gehäuse befestigt, um Verlustwärmeströme zu vermeiden.
Durch den Rahmen kann die Beschädigung der Absorberfläche, Röhren oder Flachabsorber durch Montagekräfte verhindert werden, da die Handhabungskräfte über den Rahmen abgeleitet werden.

Diese und weitere Vorteile werden durch die nachfolgende Beschreibung unter Bezug auf die begleitenden Figuren dargelegt. Der Bezug auf die Figuren in der Beschreibung dient der Unterstützung der Beschreibung und dem erleichterten Verständnis des Gegenstands. Die Figuren sind lediglich schematische Darstellungen von Ausführungsbeispielen der Erfindung. Es zeigen:
- **Fig. 1 bis** 8: perspektivische Ansichten verschiedener Ausführungsformen der Wärmeübertragungsvorrichtung,
- **Fig. 9 bis 12**: Schnittansichten weiterer Ausführungsformen der Wärmeübertragungsvorrichtung,
- Fig. 13: Schnittansichteinerweiteren Ausführungsform der Wärmeübertragungsvorrichtung.
- **Fig. 14a,b**: Querschnittansichten verschiedener Ausführungsformen von fluiddurchströmten Wärmequellen/-senken,
- **Fig. 15a-c**: Querschnittansichten weiterer Ausführungsformen von fluiddurchströmten Wärmequellen/-senken,
- **Fig. 16a,b**: Teilansichten eines Schnitts durch weitere Ausführungsformen der Wärmeübertragungsvorrichtung.

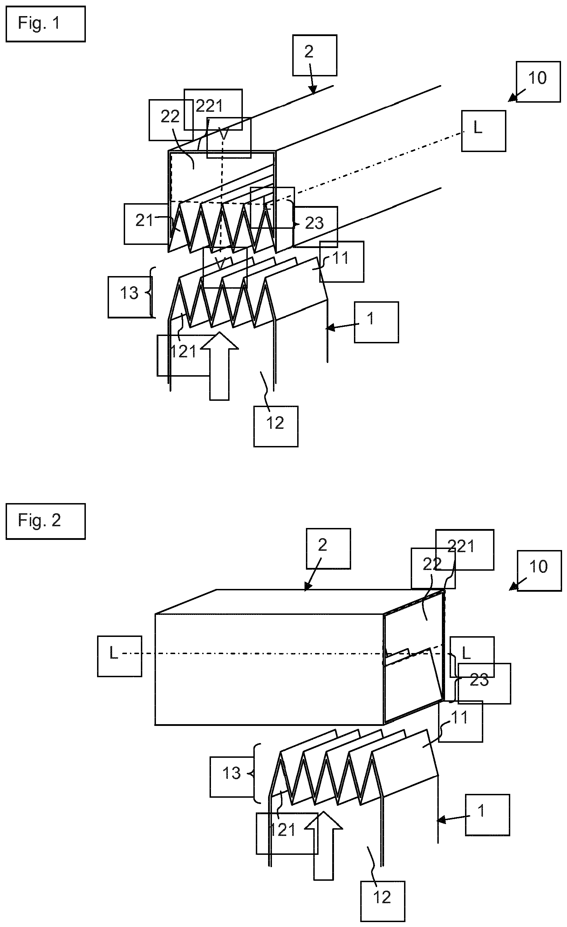

Eine perspektivische Ansicht einer ersten Ausführungsform der erfindungsgemäßen Wärmeübertragungsvorrichtung 10 ist in Fig. 1 gezeigt. Bei der Wärmequelle bzw. Wärmesenke 2 handelt es sich um einen fluiddurchströmten, dünnwandigen Kanal, der an seiner zu dem Wärmerohr 1 weisenden Unterseite 23 im Querschnitt Vertiefungen bzw. Rinnen 21 aufweist, die durch eine zickzackförmige (ziehharmonikaartige) Wellung der Wandung gebildet werden. Hierdurch wird eine Oberflächenvergrößerung sowohl an der nassen Innenseite als auch an der trockenen Außenseite erreicht. Die Vertiefungen 21 erstrecken sich parallel zur Längsachse L der Wärmequelle bzw. Wärmesenke 2 und haben entlang der Längsachse L einen konstanten Querschnitt, wodurch die Wärmequelle bzw. Wärmesenke 2 trotz der vergleichsweise filigranen Geometrie kostengünstig hergestellt werden kann, beispielsweise durch Strangpressen bzw. Extrusion. Geeigneter Weise kommen hier metallische Werkstoffe, beispielsweise Kupfer, Messing oder Aluminium bzw. Aluminiumlegierungen zum Einsatz. Das Wärmerohr 1 hat an seinem Kondensatorende 13 hohle ausgestülpte Rippen 11, in denen sich ein Teilvolumen des Transportraums 12, in dem sich das Arbeitsmedium befindet, erstreckt. Diese Rippen 11 sind so ausgebildet, dass sie eine Negativform der Vertiefungen bzw. Rinnen 21 der Wärmequelle bzw. Wärmesenke 2 sind, sodass sie in Vertiefungsrichtung V darin eingeführt werden können, bis sie daran anliegen. Die Oberfläche, die zum trockenen Wärmeübergang zur Verfügung steht, kann hierdurch wirksam erhöht werden; die "abgewickelte" Fläche der Rippen und Rinnen 11,21 kann ein Vielfaches der Oberfläche bisher üblicher kreiszylindrischer Kondensatorköpfe betragen. In dem Transportraum 12 kann auch eine Vorrichtung zum Kondensatrücktransport vorgesehen werden, etwa eine Dochtstruktur/Kapillarstruktur, was jedoch figurativ nicht gezeigt ist.

Das Wärmerohr 1 wird durch Einschieben in Pfeilrichtung in konduktiven thermischen Kontakt mit der Wärmequelle bzw. Wärmesenke 2 gebracht. Vorteilhaft ist hierbei keine Längsachsenposition L vorgegeben; aufgrund des Designs der Wärmequelle bzw. der Wärmesenke 2 bzw. seiner Rinnen 21 mit konstantem Querschnitt kann das Wärmerohr 1 an jeder beliebigen Position "angedockt" werden.

Durch die Ausrichtung der Vertiefungen 21 der Wärmequelle bzw. Wärmesenke 2 parallel zur Längsachse L wird nicht nur eine Erhöhung der inneren/äußeren Oberflächen erreicht, sondern es kann auch der Druckverlust minimiert werden, da die Nassseite der Vertiefungen 21 in Strömungsrichtung liegt und die Strömung dadurch keine Umlenkung erfährt. Diese Maßnahmen tragen dazu bei, dass die erfindungsgemäße Wärmeübertragungsvorrichtung 10 neben einer hohen thermischen Effizienz einen guten Gesamtwirkungsgrad bei Einbeziehung der Hilfsenergie aufweist.

Man kann den Innenraum 22 der Wärmequelle bzw. Wärmesenke 2 gedanklich aufteilen in den dünnwandigen Fluidführungskanal 221 und den Raum, der zwischen den Vertiefungen 21 liegt.

Die Ausrichtung der Vertiefungen 21 muss jedoch nicht in jeder Ausführungsform parallel zu der Längsachse L sein. Wie in Fig. 2 gezeigt ist, können diese auch normal zur Längsachse L ausgerichtet sein. Hierbei wird der gleiche Effekt hinsichtlich der Vergrößerung der inneren und äußeren Oberflächen wie oben beschrieben erzielt, während jedoch ein größerer Druckverlust zu erwarten ist; aufgrund von Wirbeln bzw. Turbulenzen, die an den Spitzen der nach innen weisenden "Berge" der Vertiefungen 21 entstehen, kann jedoch auch hier ein guter Wärmeübergangskoeffizient an der Nassseite erreicht werden.

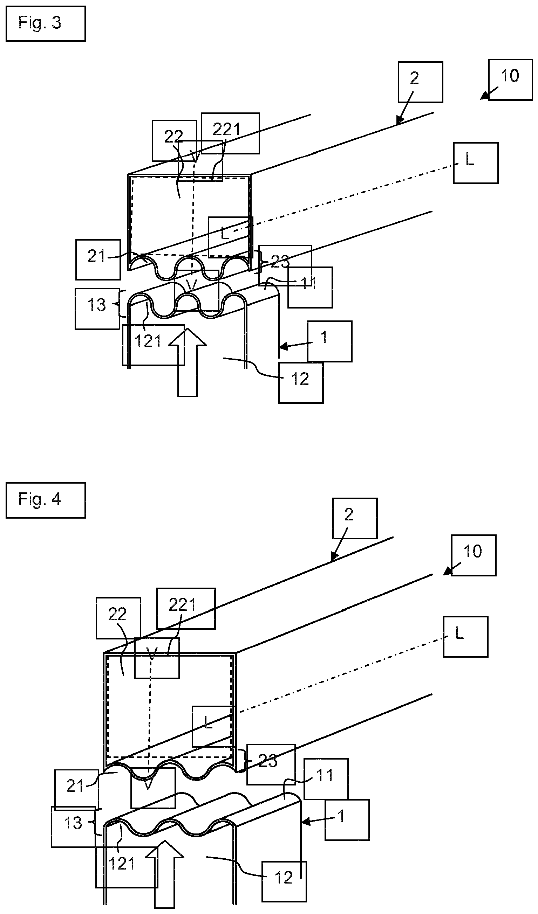

**Fig.** 3 und **Fig.** 4 zeigen zwei weitere mögliche Querschnittsformen der Vertiefungen 21 bzw. der Ausstülpungen 11; diese können auch gewellt sein, wobei zwei verschiedene Wellenhöhen beispielhaft dargestellt sind.

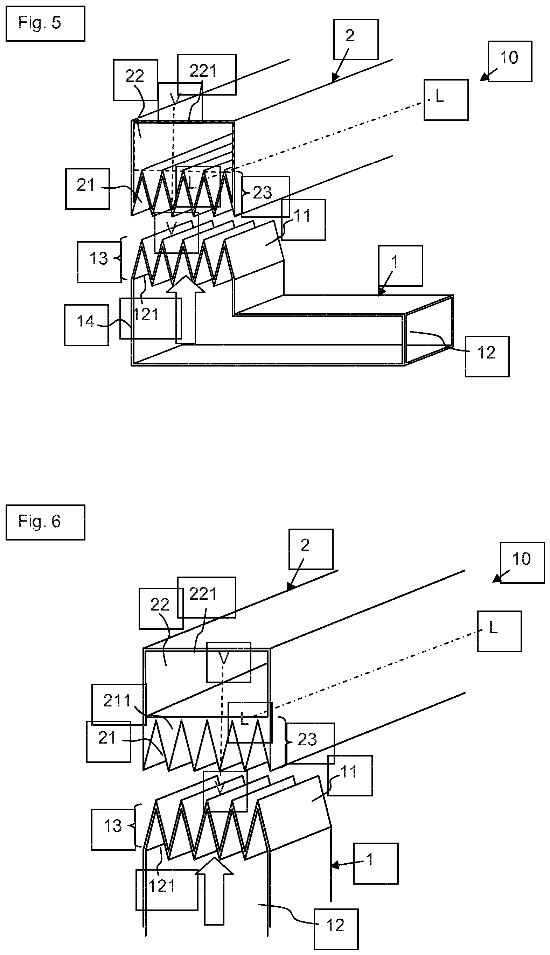

**Fig. 5** zeigt eine weitere Ausführungsform der erfindungsgemäßen Wärmeübertragungsvorrichtung 10, wobei das Wärmerohr 1 hier eine L-Form hat. Das Kondensatorende 13 befindet sich am freien Ende eines kurzen Stückes 14. Insbesondere bei dieser Ausführungsform kann eine Dochtstruktur im Transportraum vorgesehen werden, um Ansammlungen von Arbeitsmedium am Kondensatorende 13 bei ungünstigen Montagewinkeln zu verhindern, was die Figur jedoch nicht zeigt. Das Wärmerohr kann dann, beispielsweise in Fassadenkollektoren, auch horizontal liegend verbaut werden. Es kann insbesondere vorgesehen sein, diese Wärmeübertragungsvorrichtung 10 in einem thermischen Solarkollektor einzusetzen, wobei die Wärmequelle bzw. Wärmesenke 2 etwa in Bezug auf die Aperturebene hinten liegend eingebaut werden kann und über die L-Form des Wärmerohrs 1 bzw. einer Dimensionierung der Länge des kurzen Stücks eine Einstellung des Abstands Absorber-transparente Abdeckung erfolgen kann. Insbesondere vorteilhaft ist das Wärmerohr in L-Form aber, wenn das Wärmerohr einen sehr flachen Querschnitt hat; in dem abgewinkelten (kurzen) Stück kann der Querschnitt aufgeweitet werden, um eine große Stirnfläche zur Wärmeübertragung zu erreichen.

In **Fig. 6** ist eine Ausführungsform der Wärmeübertragungsvorrichtung 10 gezeigt, bei der die Wärmequelle bzw. Wärmesenke 2 nicht vollständig als dünnwandiger Hohlkörper ausgebildet ist, sondern in dem unteren Bereich 23, in dem sich die Vertiefungen 21 befinden, ein Massivkörper 211 ist. Der Innenraum 2, in dem das Wärmetransportmedium zirkuliert, besteht hier nur aus dem rechteckigen Fluidführungskanal 221. Der Materialeinsatz ist hierbei zwar etwas erhöht, auch ist die innere Oberfläche der Nassseite nicht so groß wie bei den vorgenannten Ausführungsformen, jedoch können durch die Ausbildung der Vertiefungen 21 als Teil des Massivkörpers 211 sehr steife Vertiefungswandungen 21 erhalten werden, die auch unter vergleichsweise großer Presskrafteinwirkung in Richtung der Längsachse des Wärmerohrs 1 sich kaum verformen. Die Herstellbarkeit wird hierdurch nicht beeinträchtigt; auch eine Wärmequelle bzw. Wärmesenke 2 mit dem gezeigten Querschnitt kann problemlos extrudiert/stranggepresst werden. Der Druckverlust ist aufgrund des rechteckigen Fluidführungskanals 221 ohne Einragungen vergleichsweise gering, während der Wärmeübergangskoeffizient an der Nassseite durch geeignete Wahl der Oberflächenrauheit und einer angepassten Betriebsweise ausreichend ist.

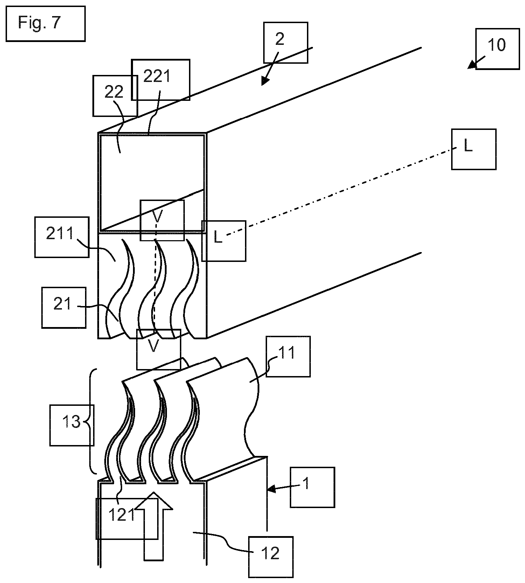

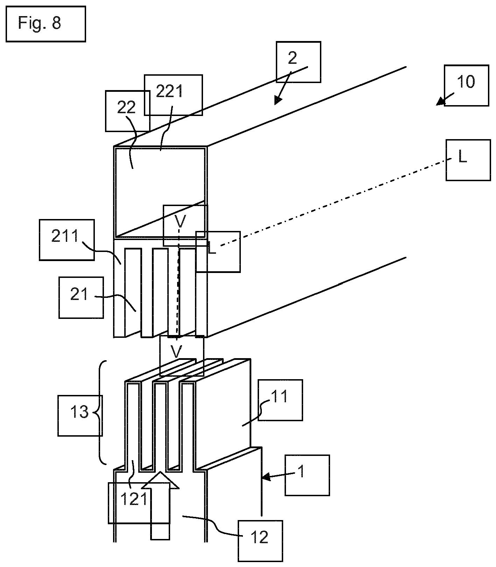

In **Fig. 7** und **Fig. 8** sind weitere Ausführungsformen der Wärmeübertragungsvorrichtung 10 gezeigt, wobei in **Fig. 7** ein geschwungener, spitz zulaufender Vertiefungsquerschnitt 21 dargestellt ist und in **Fig. 8** ein rechteckiger Vertiefungsquerschnitt 21. In beiden Fällen sind die Vertiefungen 21 wieder Teil eines massiven Materialblocks 211 (siehe auch **Fig. 6****),** an den sich der Fluidführungskanal 221 anschließt. Ferner sind bei der in **Fig. 8** dargestellten Ausführungsform keine Hinterschneidungen vorhanden, sodass ein mit der Wärmequelle bzw. Wärmesenke 2 in Kontakt stehendes Wärmerohr 1 problemlos in Vertiefungsrichtung V herausgezogen werden kann ohne evtl. benachbarte Wärmerohre 1 lösen zu müssen.

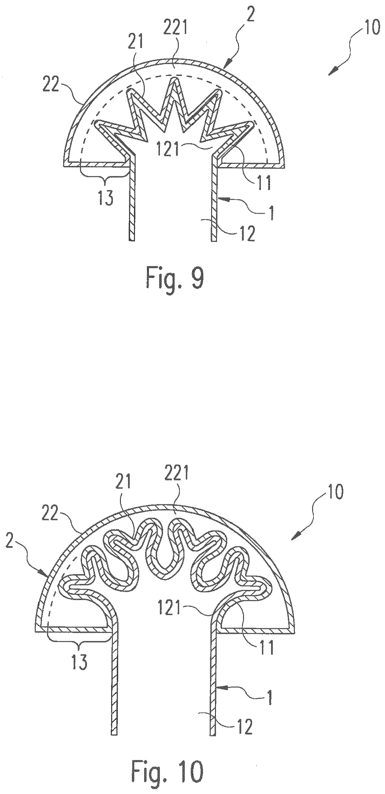

In den Ausführungsformen der Wärmeübertragungsvorrichtung 10, die in **Fig. 7****,** **Fig. 9** und **Fig. 10** gezeigt sind, sind die Vertiefungen 21 derart an der fluiddurchströmten Wärmequelle bzw. Wärmesenke 2 angeordnet, dass sich Hinterschneidungen ergeben; das Wärmerohr 1 kann hierdurch nicht entlang seiner Längsachse herausgezogen werden, sondern muss zum Entkoppeln von der Wärmequelle bzw. Wärmesenke 2 in dessen Längsrichtung bis zu einem offenen Ende bewegt werden. Hierdurch kann eine weiter vergrößerte Oberfläche erreicht werden, wobei die Oberflächenvergrößerung im Falle der verästelten Struktur der **Fig. 10** sehr deutlich ausfällt. Hinsichtlich der Herstellbarkeit sind auch bei den Ausführungsformen mit Hinterschneidungen keine wesentlichen Mehrkosten zu erwarten, da bei einer Herstellung durch Strangpressen lediglich durch den Werkzeugbau von der Geometrie abhängige Kosten entstehen.

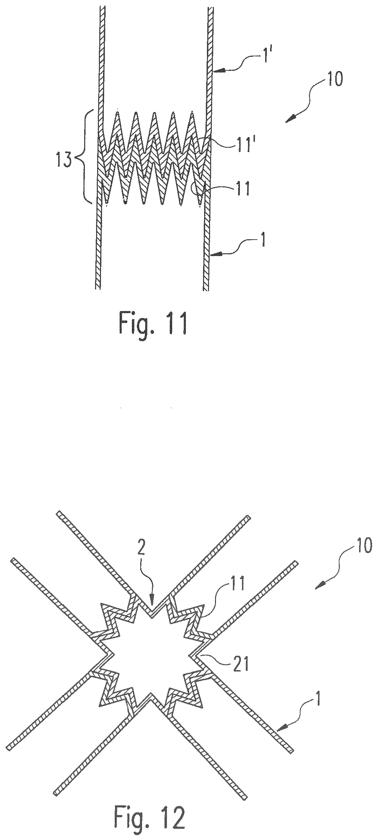

In **Fig. 11** ist eine Ausführungsform dargestellt, gemäß der es sich bei der Wärmequelle bzw. Wärmesenke selbst um ein Wärmerohr 1' handelt. Die einander kontaktierenden Enden der Wärmerohre 1',1 sind hierbei gegengleich geformt; Wärme kann so vom Kondensatorende 13 des einen Wärmerohrs 1 an das Verdampferende des anderen Wärmerohrs 1' übertragen werden. Die hohlen Rippen 11 des einen Wärmerohrs 1 greifen dabei in die zwischen den Rippen des anderen Wärmerohrs 1' liegenden Vertiefungen 11' ein. Die Rippen 11 bzw. "Gegenrippen" haben hierbei grundsätzlich den gleichen Aufbau wie vorstehend beschrieben; in ihnen zirkuliert das Arbeitsmedium.

Fig. 12 zeigt eine sternförmige Wärmequelle bzw. Wärmesenke 2, die umlaufend Vertiefungen 21 aufweist. Die Längsachse der Wärmequelle bzw. Wärmesenke 2 erstreckt sich normal zur Bildebene. Gemäß dieser Ausführungsform kann an einer Längsachsenposition der Wärmequelle bzw. Wärmesenke 2 mehr als ein Wärmerohr 1 angeordnet werden - wie gezeigt vier Stück - oder sogar noch mehr, was nicht figurativ gezeigt ist. Hinsichtlich der Fertigung gilt oben Beschriebenes mit den gleichen Vorteilen.

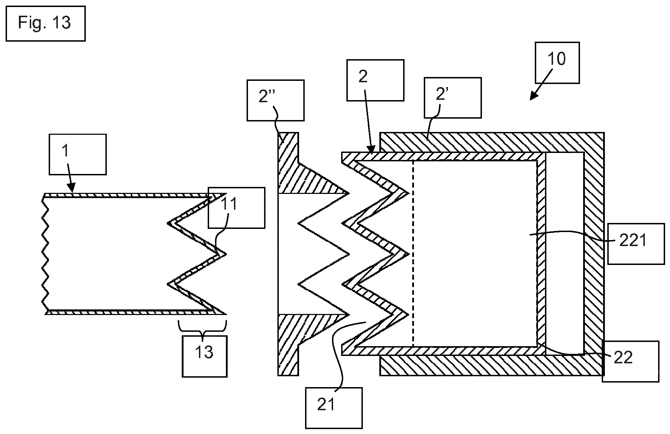

In **Fig. 13** ist eine Ausführungsform dargestellt, die prinzipiell auf die in **Fig. 1** gezeigte Ausführungsform zurückgeht bzw. diese beinhaltet. Die Figur zeigt einen Schnitt entlang der Längsmittelebene des Wärmerohrs 1. Hier ist eine Wärmedämmung 2',2" vorgesehen, die sowohl die Rückseite der Wärmesenke 2 als auch die zu den Wärmerohren 1 weisende Vorderseite abdeckt. Die Wärmedämmung 2',2" ist aus zwei Teilen zusammengesetzt, einem hinteren Teil 2' und einem vorderen Teil 2", der entsprechende Durchstecköffnungen für die Wärmerohre aufweist. Der vordere Teil der Wärmedämmung 2" ist zudem entsprechend der Kontur der Vertiefungen 21 gezackt und greift in diese ein. Die fluiddurchtrömte Wärmesenke 2 ist dazu vorgesehen bis auf Anschlag in den hinteren Teil 2' der Wärmedämmung eingesetzt zu werden, sodass der vordere Teil 2" der Wärmedämmung bündig angeschlossen werden kann.

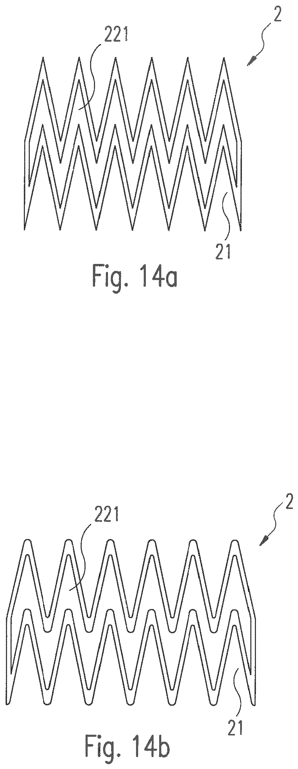

In den **Fig. 14a** und **Fig. 14b** ist jeweils eine Querschnittsansicht (Längserstreckung in die Bildebene hinein) einer Wärmequelle bzw. Wärmesenke 2 gezeigt, bei der es sich um ein fluiddurchströmtes, extrudiertes Profil handelt. Hierbei sind Vertiefungen 21 an voneinander abgewandten Seiten des Profils vorgesehen, sodass prinzipiell von beiden Seiten ein Wärmerohr mit der Wärmequelle bzw. Wärmesenke 2 gekoppelt werden kann, wobei der Hauptvorteil allerdings darin liegt, dass die Wände der Wärmequelle bzw. Wärmesenke 2 parallel verlaufen, was zu einer gleichmäßigeren Durchströmung beiträgt.

Bei der in **Fig. 14b** gezeigten Ausführungsform sind die Ecken verrundet und etwas aufgedickt, was der Innendruckstabilität zugute kommt und die Kerbwirkung reduziert. Die gezeigte Wärmequelle bzw. Wärmesenke 2 in Form des zickzackförmigen stranggepressten/extrudierten Profils muss natürlich nicht beidseitig mit einem Wärmerohr versehen werden; in die nicht zum Koppeln mit einem Wärmerohr verwendeten Rinnen 21 kann auch Dämmmaterial eingelegt werden, um beispielsweise einen flexiblen Solarkollektor zu schaffen.

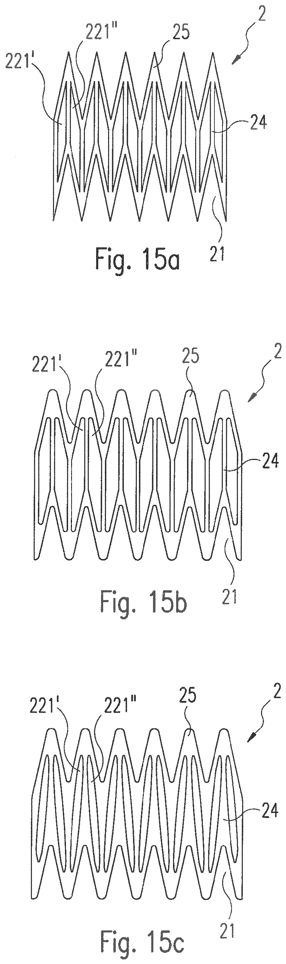

Die Fig. **15a** bis **15c** zeigen wiederum Querschnitte von Wärmequellen bzw. Wärmesenken 2 in Form eines fluiddurchströmen Strangpressprofils/ Extrudats. Auch hier weisen die "Spitzen" der Rinnenzwischenräume Aufdickungen 25 auf. Als Besonderheit sind zwischen den Rinnenzwischenräumen und den gegenüberliegenden Rinnen 21 ("versetzte" Anordnung) jeweils Stege 24 vorgesehen sind, die den bei anderen Ausführungsformen einteiligen Fluidkanal 221 (siehe **Fig. 14a,b****)** in mehrere Teilkanäle 221',221" unterteilen. Die Stege 24 tragen dazu bei, dass Wärme von dem/an das Wärmerohr zusätzlich über die an das Fluid grenzenden Oberflächen der Stege 24 an das Fluid übertragen werden kann, da die Stege 24 konduktiv Wärme transportieren. Zur Erhöhung der Innendruckstabilität sind verschiedene Wandstärken bzw. Aufdickungen der Stege 24 bzw. der Wandungen der Wärmequelle bzw. Wärmesenke 2 möglich, was exemplarisch gezeigt ist.

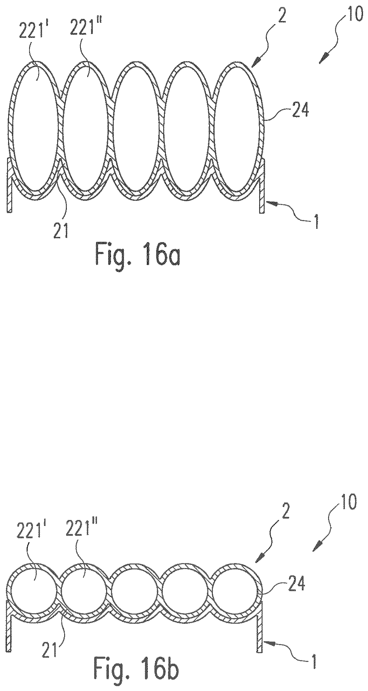

In den **Fig. 16a** und **16b** ist jeweils eine Schnittansicht eines Teils der erfindungsgemäßen Wärmeübertragungsvorrichtung 10 gezeigt, wobei nur der an die Wärmequelle bzw. Wärmesenke 2 angrenzende Teil des Wärmerohrs 1 gezeigt ist. Die Wärmequelle bzw. Wärmesenke 2 ist als stranggepresstes bzw. extrudiertes Profil ausgebildet, das an voneinander abgewandten Seiten jeweils Rinnen 21 hat, die sich gegenüberliegen. Die Rinnen 21 sind jeweils durch Stege 24 mit den gegenüberliegenden Rinnen 21 verbunden, sodass sich eine Mehrzahl unabhängiger fluiddurchströmter Teilkanäle 221',221" ergibt. Die Rinnen 21, Rinnenzwischenräume und Stege 24 verschmelzen" quasi zu einzelnen elliptischen bzw. runden Teilkanälen 221,221". Die elliptische bzw. runde Querschnittsform der Teilkanäle 221'221" ist im Hinblick auf eine homogene Durchströmung und Druckverlust eine gute Lösung, bietet allerdings eine nicht genauso große äußere Oberfläche wie eine zickzackförmige Außenform.

## Patentansprüche

1. Wärmeübertragungsvorrichtung (10)zur Abfuhr von Wärme aus einem Solarkollektor, umfassend
- ein Wärmerohr (1) mit einem Transportraum (12) und
- eine Wärmesenke (1',2) oder Wärmequelle (1',2), wobei das Wärmerohr (1) mit der Wärmesenke (1',2) oder Wärmequelle (1',2) in thermischem Kontakt steht, **dadurch gekennzeichnet, dass**
- einer der beiden Kontaktpartner Wärmerohr (1) oder Wärmesenke (1',2) bzw. Wärmequelle (1',2) eine Mehrzahl hohler Ausstülpungen (11) aufweist und der andere Kontaktpartner eine Mehrzahl Vertiefungen (21) hat, die eine Negativform zu den Ausstülpungen (11) sind,
wobei zumindest eine vorbestimmte Anzahl der Ausstülpungen (11) des einen Kontaktpartners in die Vertiefungen (21,11') des anderen Kontaktpartners eingreift, wobei die Wärmeübertragungsvorrichtung (10) zumindest eine Anpressvorrichtung aufweist, wobei die Anpressvorrichtung zur Erzeugung einer Anpresskraft in Vertiefungsrichtung (V) kraftleitend mit der Wärmequelle (1',2) bzw. Wärmesenke (1',2) und dem Wärmerohr (1) verbunden ist.

2. Wärmeübertragungsvorrichtung (10) nach Anspruch 1,
**dadurch gekennzeichnet, dass**
die hohlen Ausstülpungen (11) Rippen (11) sind und die Vertiefungen (21) korrespondierende Rinnen (21).

3. Wärmeübertragungsvorrichtung (10) nach einem der Ansprüche 1 oder 2,
**dadurch gekennzeichnet, dass**
die Wärmequelle (1',2) bzw. Wärmesenke (1',2) fluiddurchströmt ist und/oder selbst zumindest ein Wärmerohr (1') umfasst.

4. Wärmeübertragungsvorrichtung (10) nach einem der Ansprüche 1 bis 3,
**dadurch gekennzeichnet, dass**
die Wärmequelle (1',2) bzw. Wärmesenke (1',2) zumindest einen Fluidführungskanal (221) aufweist, bevorzugt einen dünnwandigen Fluidführungskanal (221), der besonders bevorzugt eine Wandstärke in einem Bereich von 0,5 mm bis 5,0 mm, am meisten bevorzugt in einem Bereich von 0,7 bis 1,5 mm, aufweist,
- die gesamte Wärmequelle (1',2) bzw. Wärmesenke (1',2) mit den Vertiefungen (21) oder Ausstülpungen als Hohlkörper ausgebildet ist, oder
- die Vertiefungen (21) der Wärmequelle (1',2) bzw. Wärmesenke (1',2) in einem massiven Materialblock (211) vorliegen, der an den Fluidführungskanal (221) angrenzt und der bevorzugt einstückig mit dem Fluidführungskanal (221) ausgebildet ist.

5. Wärmeübertragungsvorrichtung (10) nach einem der Ansprüche 2 bis 4,
**dadurch gekennzeichnet, dass**
die Rinnen (21) der Wärmequelle (1',2) bzw. Wärmesenke (1',2)
- in Längsrichtung (L) der Wärmequelle (1',2) bzw. Wärmesenke (1',2) ausgerichtet sind und bevorzugt in Längsrichtung (L) einen konstanten Querschnitt haben oder
- normal zu der Längsrichtung (L) des Wärmequelle (1',2) bzw. Wärmesenke (1',2) ausgerichtet sind.

6. Wärmeübertragungsvorrichtung (10) nach einem der Ansprüche 4 oder 5,
**dadurch gekennzeichnet, dass**
zumindest eine Rinne (21) der Wärmequelle bzw. Wärmesenke (2) mit einer gegenüberliegenden Wand des Wärmequelle bzw. Wärmesenke (2) über einen Steg (24) verbunden ist, so dass der Fluidführungskanal (221) zumindest zwei unabhängig durchströmbare Teilkanäle (221',221") aufweist.

7. Wärmeübertragungsvorrichtung (10) nach Anspruch 6, **dadurch gekennzeichnet, dass**
die Wärmequelle oder Wärmesenke (2) an voneinander abgewandten Seiten Rinnen (21) hat, wobei entweder
- die Rinnen (21) mit gegenüberliegenden Rinnenzwischenräumen über Stege (24) verbunden sind oder
- die Rinnen (21) mit gegenüberliegenden Rinnen (21) über Stege (24) verbunden sind.

8. Wärmeübertragungsvorrichtung (10) nach einem der Ansprüche 1 bis 7,
**dadurch gekennzeichnet, dass**
die Anpressvorrichtung eine Überwurfmutter, einen Kniehebel und/oder einen Spannhebel umfasst.

9. Wärmeübertragungsvorrichtung (10) nach einem der Ansprüche 1 bis 8,
**dadurch gekennzeichnet, dass**
die Rippen (11) und korrespondierende Rinnen (21) jeweils zickzackförmige oder verästelte oder rechteckige oder gewellte oder spitz zulaufende, bevorzugt in sich geschwungene, Querschnitte haben, wobei bevorzugt die Rinnen und/oder Rippen eine Aufdickung (25) aufweisen.

10. Wärmeübertragungsvorrichtung (10) nach einem der Ansprüche 1 bis 9,
**dadurch gekennzeichnet, dass**
die Wärmequelle (1',2) bzw. Wärmesenke (1',2) umlaufend Vertiefungen (21) oder Ausstülpungen aufweist, wobei bevorzugt mehr als ein Wärmerohr (1) mit der Wärmequelle (1',2) bzw. Wärmesenke (1',2) verbunden ist, das sich jeweils in radialer Richtung von der Wärmequelle bzw. Wärmesenke (2) weg erstreckt.

11. Wärmeübertragungsvorrichtung (10) nach einem der Ansprüche 1 bis 10,
**dadurch gekennzeichnet, dass**
das Wärmerohr (1) L-förmig ist, wobei die Ausstülpungen (11) oder Vertiefungen bevorzugt an einem Ende eines kurzen Stückes (14) des L-förmigen Wärmerohrs (1) vorliegen.

12. Solarkollektor,
der zumindest eine Strahlungsabsorptionsfläche, die thermisch mit zumindest einem Wärmerohr (1) verbunden ist, aufweist, wobei das Wärmerohr (1) an seinem Kondensatorende (13) über eine Wärmeübertragungsvorrichtung trocken an eine Wärmesenke (2) angebunden ist, der thermisch mit einem Wärmeabfuhrsystem verbindbar ist,
**dadurch gekennzeichnet, dass**
die Wärmeübertragungsvorrichtung eine Wärmeübertragungsvorrichtung (10) nach zumindest einem der Ansprüche 1 bis 11 ist.

13. Solarkollektor nach Anspruch 12 ,
**dadurch gekennzeichnet, dass**
die Strahlungsabsorptionsfläche auf einer Mantelfläche des Wärmerohrs (1) vorliegt oder auf einem Absorberstreifen, der thermisch mit dem Wärmerohr (1) verbunden ist.

14. Solarkollektor nach einem der Ansprüche 12 oder 13,
**dadurch gekennzeichnet, dass**
die Wärmesenke (2) von einem Gehäuse umgeben ist, das für jedes der Wärmerohre (1) eine Durchtrittsöffnung aufweist, wobei das Gehäuse bevorzugt eine Wärmedämmung (2',2") aufweist, die besonders bevorzugt die Wärmesenke (2) spaltfrei umhüllt und/oder
- einen Rahmen aufweist, der sich entlang der Längsachse des Wärmerohrs (1) erstreckt, wobei das Wärmerohr (1) bevorzugt an dem Rahmen fixiert, besonders bevorzugt wärmebrückenfrei fixiert ist.

## Claims

1. Heat transfer apparatus (10) for removal of heat from a solar collector, comprising
- a heat pipe (1) with a transport space (12), and
- a heat sink (1', 2) or heat source (1', 2), wherein the heat pipe (1) is in thermal contact with the heat sink (1', 2) or heat source (1', 2),
**characterized in that**
- one of the two contact partners heat pipe (1) and heat sink (1', 2) or heat source (1', 2) has a plurality of hollow protuberances (11), and the other contact partner has a plurality of depressions (21) with a negative shape in relation to the protuberances (11),
wherein at least a predetermined number of the protuberances (11) of the one contact partner engage into the depressions (21, 11') of the other contact partner,
wherein the heat transfer apparatus (10) has at least one pressing apparatus, wherein the pressing apparatus, for generating a pressing force in the depression direction (V), is connected in a forceconducting manner to the heat source (1', 2) or heat sink (1', 2) and to the heat pipe (1).

2. Heat transfer apparatus (10) according to Claim 1,
**characterized in that**
the hollow protuberances (11) are ribs (11), and the depressions (21) are corresponding grooves (21).

3. Heat transfer apparatus (10) according to either of Claims 1 and 2,
**characterized in that**
the heat source (1', 2) or heat sink (1', 2) is flowed through by fluid and/or itself comprises at least one heat pipe (1').

4. Heat transfer apparatus (10) according to one of Claims 1 to 3,
**characterized in that**
the heat source (1', 2) or heat sink (1', 2) has at least one fluid-guiding channel (221), preferably a thin-walled fluid-guiding channel (221), which particularly preferably has a wall thickness in a range from 0.5 mm to 5.0 mm, most preferably in a range from 0.7 mm to 1.5 mm,
- the entire heat source (1', 2) or heat sink (1', 2), with the depressions (21) or protuberances, is formed as a hollow body, or
- the depressions (21) of the heat source (1', 2) or heat sink (1', 2) are provided in a solid material block (211) which adjoins the fluid-guiding channel (221) and which is preferably formed in one piece with the fluid-guiding channel (221).

5. Heat transfer apparatus (10) according to one of Claims 2 to 4,
**characterized in that**
the grooves (21) of the heat source (1', 2) or heat sink (1', 2)
- are oriented in the longitudinal direction (L) of the heat source (1', 2) or heat sink (1', 2) and preferably have a constant cross section in the longitudinal direction (L), or
- are oriented so as to be normal to the longitudinal direction (L) of the heat source (1', 2) or heat sink (1', 2).

6. Heat transfer apparatus (10) according to either of Claims 4 and 5,
**characterized in that**
at least one groove (21) of the heat source or heat sink (2) is connected via a web (24) to an opposite wall of the heat source or heat sink (2), with the result that the fluid-guiding channel (221) has at least two sub-channels (221', 221'') which can be flowed through independently.

7. Heat transfer apparatus (10) according to Claim 6,
**characterized in that**
the heat source or heat sink (2) has grooves (21) on sides facing away from one another, wherein either
- the grooves (21) are connected via webs (24) to opposite groove intermediate spaces, or
- the grooves (21) are connected via webs (24) to opposite grooves (21).

8. Heat transfer apparatus (10) according to one of Claims 1 to 7,
**characterized in that**
the pressing apparatus comprises a union nut, a knee lever and/or a clamping lever.

9. Heat transfer apparatus (10) according to one of Claims 1 to 8,
**characterized in that**
the ribs (11) and corresponding grooves (21) in each case have cross sections which are zigzagged or branched or rectangular or wavy or which, preferably being curved, taper to a point, wherein preferably, the grooves and/or ribs have a thickening (25).

10. Heat transfer apparatus (10) according to one of Claims 1 to 9,
**characterized in that**
the heat source (1', 2) or heat sink (1', 2) has depressions (21) or protuberances around the circumference, wherein preferably, more than one heat pipe (1) is connected to the heat source (1', 2) or heat sink (1', 2), in each case extending away from the heat source or heat sink (2) in the radial direction.

11. Heat transfer apparatus (10) according to one of Claims 1 to 10,
**characterized in that**
the heat pipe (1) is L-shaped, wherein the protuberances (11) or depressions are preferably provided at one end of a short piece (14) of the L-shaped heat pipe (1).

12. Solar collector,
having at least one radiation absorption surface which is connected thermally to at least one heat pipe (1), wherein the heat pipe (1), at its condenser end (13), is, via a heat transfer apparatus, attached in a dry manner to a heat sink (2), which can be connected thermally to a heat removal system,
**characterized in that**
the heat transfer apparatus is a heat transfer apparatus (10) according to at least one of Claims 1 to 11.

13. Solar collector according to Claim 12,
**characterized in that**
the radiation absorption surface is provided on a lateral surface of the heat pipe (1) or on an absorber strip which is connected thermally to the heat pipe (1).

14. Solar collector according to either of Claims 12 and 13,
**characterized in that**
the heat sink (2) is surrounded by a housing which has a passage opening for each of the heat pipes (1), wherein the housing preferably has thermal insulation (2', 2"), which particularly preferably encases the heat sink (2) without any gaps, and/or
- has a frame which extends along the longitudinal axis of the heat pipe (1), wherein the heat pipe (1) is preferably fixed, particular preferably fixed without any heat bridges, to the frame.

## Revendications

1. Dispositif de transfert de chaleur (10) destiné à évacuer de la chaleur d'un capteur solaire, ledit dispositif comprenant
- un caloduc (1) pourvu d'un espace de transport (12) et
- un dissipateur de chaleur (1', 2) ou une source de chaleur (1', 2),
le caloduc (1) étant en contact de chaleur avec le dissipateur de chaleur (1', 2) ou la source de chaleur (1', 2),
**caractérisé en ce que**
- l'un des deux partenaires de contact, le caloduc (1) ou le dissipateur de chaleur (1', 2) respectivement la source de chaleur (1', 2), comporte une pluralité de protubérances creuses (11) et l'autre partenaire de contact comporte une pluralité de dépressions (21) dont la forme est le négatif de celle des protubérances (11) ,
au moins un nombre prédéterminé des protubérances (11) d'un partenaire de contact s'engageant dans les dépressions (21, 11') de l'autre partenaire de contact, le dispositif de transfert de chaleur (10) comportant au moins un dispositif de pression, le dispositif de pression étant relié en force à la source de chaleur (1', 2) respectivement au dissipateur de chaleur (1', 2) et au caloduc (1) afin de générer une force de pression en direction de l'évidement (V).

2. Dispositif de transfert de chaleur (10) selon la revendication 1,
**caractérisé en ce que**
les protubérances creuses (11) sont des arêtes (11) et les dépressions (21) sont des rainures correspondantes (21) .

3. Dispositif de transfert de chaleur (10) selon l'une des revendications 1 et 2,
**caractérisé en ce que**
la source de chaleur (1', 2) respectivement le dissipateur de chaleur (1', 2) est traversé (e) par un fluide et/ou comprend elle-même/lui-même au moins un caloduc (1').

4. Dispositif de transfert de chaleur (10) selon l'une des revendications 1 à 3,
**caractérisé en ce que**
la source de chaleur (1', 2) respectivement le dissipateur de chaleur (1', 2) comporte au moins un canal de guidage de fluide (221), de préférence un canal de guidage de fluide (221) à paroi mince, qui a de manière particulièrement préférée une épaisseur de paroi dans une gamme de 0,5 mm à 5,0 mm, de manière préférée entre toutes dans une gamme de 0,7 à 1,5 mm,
- toute la source de chaleur (1', 2) respectivement tout le dissipateur de chaleur (1', 2) pourvu (e) des dépressions (21) ou des protubérances est conçu(e) comme un corps creux, ou
- les dépressions (21) de la source de chaleur (1', 2) respectivement du dissipateur de chaleur (1', 2) sont présentes dans un bloc de matériau solide (211) qui est adjacent au canal de guidage de fluide (221) et qui est de préférence formé d'une seule pièce avec le canal de guidage de fluide (221).

5. Dispositif de transfert de chaleur (10) selon l'une des revendications 2 à 4,
**caractérisé en ce que**
les rainures (21) de la source de chaleur (1', 2) respectivement du dissipateur de chaleur (1', 2)
- sont orientées dans la direction longitudinale (L) de la source de chaleur (1', 2) respectivement du dissipateur de chaleur (1', 2) et ont de préférence une section transversale constante dans la direction longitudinale (L) ou
- sont orientées perpendiculairement à la direction longitudinale (L) de la source de chaleur (1', 2) respectivement du dissipateur de chaleur (1', 2).

6. Dispositif de transfert de chaleur (10) selon l'une des revendications 4 et 5,
**caractérisé en ce que**
au moins une rainure (21) de la source de chaleur respectivement du dissipateur de chaleur (2) est reliée à une paroi opposée de la source de chaleur respectivement du dissipateur de chaleur (2) par le biais d'une nervure (24) de sorte que le canal de guidage de fluide (221) comporte au moins deux parties de canal pouvant (221', 221") pouvant être traversées par un écoulement.

7. Dispositif de transfert de chaleur (10) selon la revendication 6,
**caractérisé en ce que**
la source de chaleur respectivement le dissipateur de chaleur (2) comporte des rainures (21) sur des côtés opposés l'un à l'autre,
- les rainures (21) étant reliées à des espaces inter-rainures opposés par le biais de nervures (24) ou bien
- les rainures (21) étant reliées à des rainures opposées (21) par le biais de nervures (24).

8. Dispositif de transfert de chaleur (10) selon l'une des revendications 1 à 7,
**caractérisé en ce que**
le dispositif de pression comprend un écrou d'accouplement, un levier à genouillère et/ou un levier de serrage.

9. Dispositif de transfert de chaleur (10) selon l'une des revendications 1 à 8,
**caractérisé en ce que**
les arêtes (11) et les rainures correspondantes (21) ont chacune des sections transversales en zigzag ou ramifiées ou rectangulaires ou ondulées ou effilées, de préférence courbes, les rainures et/ou arêtes présentant de préférence un épaississement (25).

10. Dispositif de transfert de chaleur (10) selon l'une des revendications 1 à 9,
**caractérisé en ce que**
la source de chaleur (1', 2) ou le dissipateur de chaleur (1', 2) comporte des évidements (21) ou des protubérances tout autour, de préférence plus d'un caloduc (1) étant relié à la source de chaleur (1', 2) respectivement au dissipateur de chaleur (1', 2), lesquels caloducs s'étendent chacun dans la direction radiale depuis la source de chaleur ou le dissipateur de chaleur (2).

11. Dispositif de transfert de chaleur (10) selon l'une des revendications 1 à 10,
**caractérisé en ce que**
le caloduc (1) est en forme de L, les protubérances (11) ou dépressions étant de préférence présentes à une extrémité d'une courte portion (14) du caloduc (1) en forme de L.

12. Capteur solaire,
qui comporte au moins une surface d'absorption de rayonnement qui est reliée thermiquement à au moins un caloduc (1), le caloduc (1) étant relié, à son extrémité de condenseur (13), de manière sèche par le biais d'un dispositif de transfert de chaleur, à un dissipateur de chaleur (2) qui peut être relié thermiquement à un système de dissipation de chaleur,
**caractérisé en ce que**
le dispositif de transfert de chaleur est un dispositif de transfert de chaleur (10) selon l'une au moins des revendications 1 à 11.

13. Capteur solaire selon la revendication 12,
**caractérisé en ce que**
la surface d'absorption de rayonnement est présente sur une surface latérale du caloduc (1) ou sur une bande absorbante qui est reliée thermiquement au caloduc (1).

14. Capteur solaire selon l'une des revendications 12 et 13,
**caractérisé en ce que**
le dissipateur de chaleur (2) est entouré d'un boîtier qui comporte pour chacun des caloducs (1) une ouverture de passage, le boîtier comportant de préférence une isolation thermique (2', 2") qui enferme de manière particulièrement préférée le dissipateur de chaleur (2) sans ménager d'espace et/ou
- comporte un cadre qui s'étend le long de l'axe longitudinal du caloduc (1), le caloduc (1) étant de préférence fixé au cadre, de manière particulièrement préférée sans pont thermique.
